# EUROPEAN PATENT SPECIFICATION

(11) **EP 3 479 574 B1**
(45) Date of publication and mention of the grant of the patent: **23.07.2025**
(21) Application number: 17820807.0
(22) Date of filing: 30.05.2017
(51) Int. Cl.: G06F 3/01, H04N 19/162, H04N 19/17, H04N 19/184, H04N 21/2343, H04N 21/4223, H04N 21/81, H04N 21/845, H04N 5/265, H04N 13/383, H04N 21/45, H04N 21/4728, H04N 21/462, H04N 21/482, H04N 21/6587, H04N 21/442

(54) **APPARATUS AND METHOD FOR PROVIDING AND DISPLAYING CONTENT**
VORRICHTUNG UND VERFAHREN ZUR BEREITSTELLUNG UND ANZEIGE VON INHALTEN
APPAREIL ET PROCÉDÉ DE FOURNITURE ET D'AFFICHAGE DE CONTENU

(30) Priority: 30.06.2016 US 201662357259 P; 12.08.2016 US 201662374687 P; 29.09.2016 US 201615280947; 29.09.2016 US 201615280933; 29.09.2016 US 201615280962
(43) Date of publication of application: 08.05.2019
(73) Proprietor: Sony Interactive Entertainment Inc., Tokyo 108-0075 (JP)
(72) Inventor: CASTLEMAN, Dennis D., San Mateo California 94404 (US)
(74) Representative: D Young & Co LLP
(86) International application number: PCT/US2017/035060
(87) International publication number: WO 2018/004936

(56) References cited:
- IN-A- 2866 CH2 015
- US-A- 4 208 811
- US-A- 4 208 811
- US-A1- 2012 319 928
- US-A1- 2013 125 155
- US-A1- 2014 123 162
- US-A1- 2014 282 750
- US-A1- 2015 002 529
- US-A1- 2015 264 299
- US-B1- 6 762 789
- US-B1- 8 184 069

## Description

### BACKGROUND OF THE INVENTION

### 1. Field of the Invention

The present invention relates generally to video processing and display.

### 2. Discussion of the Related Art

Video streaming is increasingly becoming one of the main ways that media contents are delivered and accessed. Video streaming traffic also accounts for a large portion of Internet bandwidth consumption. Previously proposed arrangements are disclosed in US 2012/319928 A1, IN 2866 CHE 2015, US 4 208 811 A, US 2015/002529 A1, US 2014/123162 A1, US 2015/264299 A1 and US 2013/125155 A1.

### SUMMARY OF THE INVENTION

The present invention is defined by the independent claims. The dependent claims define the preferred embodiments.

A better understanding of the features and advantages of various embodiments of the present invention will be obtained by reference to the following detailed description and accompanying drawings which set forth an illustrative embodiment in which principles of embodiments of the invention are utilized.

### BRIEF DESCRIPTION OF THE DRAWINGS

The above and other aspects, features and advantages of embodiments of the present invention will be more apparent from the following more particular description thereof, presented in conjunction with the following drawings wherein:
FIG. 1 is a process diagram illustrating a process for providing content in accordance with some embodiments of the present invention;
FIG. 2 is a flow diagram illustrating a method for providing content in accordance with some embodiments of the present invention;
FIG. 3 is a flow diagram illustrating a method for displaying content in accordance with some embodiments of the present invention;
FIGS. 4A and 4B are illustrations of a content display area in accordance with some embodiments of the present invention;
FIG. 5 is an illustration of image blending in accordance with some embodiments of the present invention;
FIGS. 6A and 6B are illustrations of image cells in accordance with some embodiments;
FIGS. 7A and 7B are illustrations of focal areas in accordance with some embodiments; and
FIG. 8 is a block diagram illustrating a system in accordance with some embodiments of the present invention.

### DETAILED DESCRIPTION

Digital video content may be stored and transmitted in a variety of formats. Factors such as the video's resolution, frame rate, coding format, compression scheme, and compression factor can affect the total size and bit rate of the video file. In digital multimedia, bit rate generally refers to the number of bits used per unit of playback time to represent a continuous medium such as audio or video. The encoding bit rate of a multimedia file may refer to the size of a multimedia file divided by the playback time of the recording (e.g. in seconds). The bit rate of a video content file affects whether the video can be streamed without interruptions under network bandwidth constraints between a streaming server and a playback device.

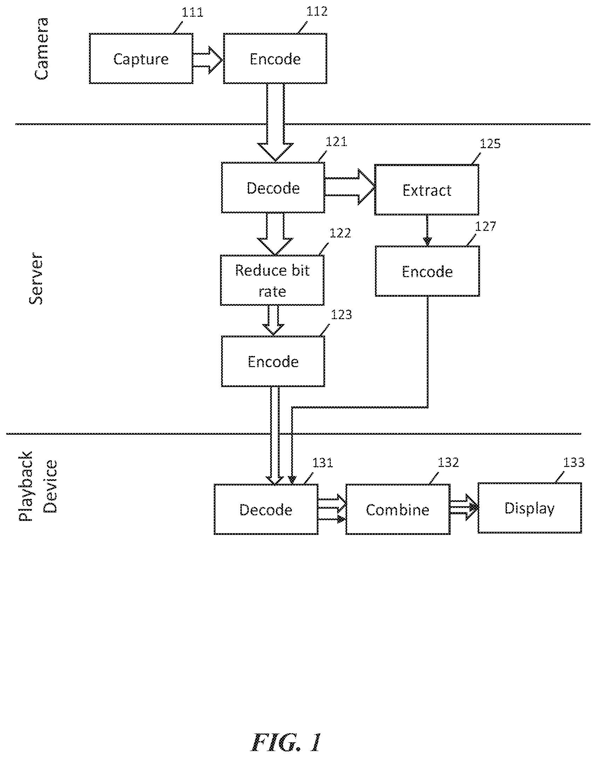

Referring first to FIG. 1, a process for recording, hosting, and displaying video content according to some embodiments is shown. In step 111, video content is captured by a camera system. In some embodiments, the camera system may comprise one or more of a conventional camera system, a stereoscopic camera system, a panoramic camera system, a surround view camera system, a 360-degree camera system, and an omnidirectional camera system, and the like. In step 112, the captured video is encoded and transmitted to a server. In some embodiments, the encoding performed in step 112 may comprise lossy or lossless video encoding. In some embodiments, the video may comprise a live-streaming or a prerecorded video content. In some embodiments, the camera may communicate with the server via wireless or wired means by way of a network, such as for example the Internet.

In some embodiments, the camera performing steps 111 and 112 may comprise a segmented video capture device such as those described in United States Provisional Patent Application No. 62/357,259, filed on June 30, 2016, entitled "APPARATUS AND METHOD FOR CAPTURING AND DISPLAYING SEGMENTED CONTENT". With a segmented video capture device, each captured video stream be provided as separate video streams to the server or may be combined into a single video stream prior to step 112.

In step 121, the server decodes the video content received from the camera. In some embodiments, the decoded video may comprise a video in the originally captured resolution, frame rate, and/or bit rate. In step 122, the server reduces the bit rate of the decoded video stream. In some embodiments, the bit rate of the video content may be reduced by one or more of: reducing the resolution of the video, reducing the frame rate of the video, and compressing the video with a compression algorithm. In step 123, the reduced bit rate video is encoded and prepared for streaming to a playback device. In some embodiments, steps 122 and 123 may comprise a single step. For example, an encoding algorithm may be used reduce the bit rate of the received content.

In step 125, one or more portions of the received video are extracted from received video. Portions of a content item may generally refer to a spatial section of the video content display area. In some embodiments, a portion of the content may comprise an area of the content displayed area spanning one or more frames. In some embodiments, if the encoding scheme of the received content allows for partial decoding (e.g. MPEG-4 transport stream), the extraction in step 125 may be performed by partially decoding the received content. In some embodiments, step 125 may be performed in response to receiving a viewer focal area from a playback device and the extracted portion may correspond to the location of the viewer's focal area in the content. In some embodiments, step 125 may be performed on the content preliminarily and one or more portions may be extracted and stored for later retrieval by playback devices. In step 127, the extracted portion is encoded and prepared for streaming to the playback device.

As used herein and throughout this disclosure, high and low bit rates are relative terms referring to the relative bit rates of the at least two versions of a video content item provided from the server to a playback device. Generally, the server may generate at least one low bit rate version of the received video and extract at least a portion of a version of the content item having a higher bit rate as compared to the low bit rate version. In some embodiments, multiple versions of a video content item having different bit rates may be created by the servers. In some embodiments, bit rate reduction may also be performed on the received video prior to extracting portions of the content in step 125 and/or performed on the portion extracted in step 125. Generally, a high bit rate version of the content item has a higher average bit rate than the low bit rate version of the content item over the duration of the video content. In some embodiments, the bit rate of the high bit rate version of the content item may be higher than the low bit rate version of the content item for some or all of temporal segments of the video content. In some cases, the video stream containing the extracted portion of the high bit rate version of the content item may have a lower bit rate as compared to the video stream comprising the low bit rate version of the content item. For example, the portion of the high bit rate version of the content item may cover a significantly smaller display area of the content as compared to the low bit rate version, resulting in the lower bit rate of the extracted portion. In some embodiments, the low bit rate version of the content item may comprise lower one or more of resolution, frame rate, and compression quality as compared to the high bit rate version of the content item. In some embodiments, the low bit rate version of the content item may comprise a lower video quality and/or definition as compare to the high bit rate version of the content item. In some embodiments, the low and high bit rate versions of the content may comprise constant bit rate (CBR) or variable bit rate (VBR) video streams.

In some embodiments, the server may communicate with the playback device by way of a network, such as for example the Internet. In step 131, the playback device receives and decodes a low bit rate version of the video content and a portion of a high bit rate portion of the video content. The portion of the high bit rate portion of the video content may be selected based on the focal area of a viewer viewing the content via the playback device. In some embodiments, the focal area of a viewer refers an area of the viewer's field of vision that is or is likely to be in focus while the viewer views the content. In some embodiments, the focal area may correspond to one or more of the central, paracentral, macular, near peripheral, and mid peripheral areas of the viewer's field of vision. The focal area of the viewer may be detected by a sensor device coupled to the playback device. In some embodiments, Inertial Measurement Unit (IMU) data recorded by a capture device of the content item may be compared to the viewer's eye and/or head direction to determine the portion of the high bit rate video content to extract for the playback device. In some embodiments, the low bit rate version of the video content and the portion of the high bit rate portion of the video content may be transmitted as separate video streams from the server to the playback device.

In step 132, the low bit rate version of the video content and the portion of the high bit rate portion of the video content are combined. In some embodiments, combining the video streams comprises combining the low bit rate version of the content item with the portion of the high bit rate version at the location of the content displayed area from which the high bit rate portion was extracted. In some embodiments, step 132 comprises blending the two video streams by including a transition area between the high and low bit rate areas of the image to reduce the noticeability of the border between the two versions of the video content. In some embodiments, step 132 further comprises scaling the low bit rate version of the video content to the resolution and/or frame rate of the high bit rate version of the content prior to combining the images.

In step 133, the combined image is displayed to the viewer. The combined image may be displayed via one or more of a flat screen display, a curved display, a dome display device, a head-mounted display device, an augmented reality display device, a virtual reality display device, and the like. In some embodiments, the combined image may be viewed by a head mounted display such as the systems and devices described in United States Patent Application No. 15/085,887, filed on March 30, 2016, entitled "Head-Mounted Display Tracking,".

In some embodiments, instead of the steps shown in FIG. 1, the high bit rate portion of the video content may be combined with the low bit rate version of the content at the server and encoded as a single video stream for transmission. While the resolution and the frame rate of such video streams may not be reduced as compared to a full high bit rate version, the overall size of the transmitted video stream may still be reduced by processing the area of the content outside of the focal area with a more lossy video compression algorithm before recombining the images.

In the process shown in FIG. 1, the portion of the content item corresponding to the user's focal area is provided in a relatively high bit rate and the remaining area of the content are provided in a relatively low bit rate. With the process shown in FIG. 1, the network bandwidth demand for achieving interruption-free video streaming may be reduced by decreasing the overall bit rate of the streaming video content while maintaining the video quality in the focal area of the viewer's field of vision.

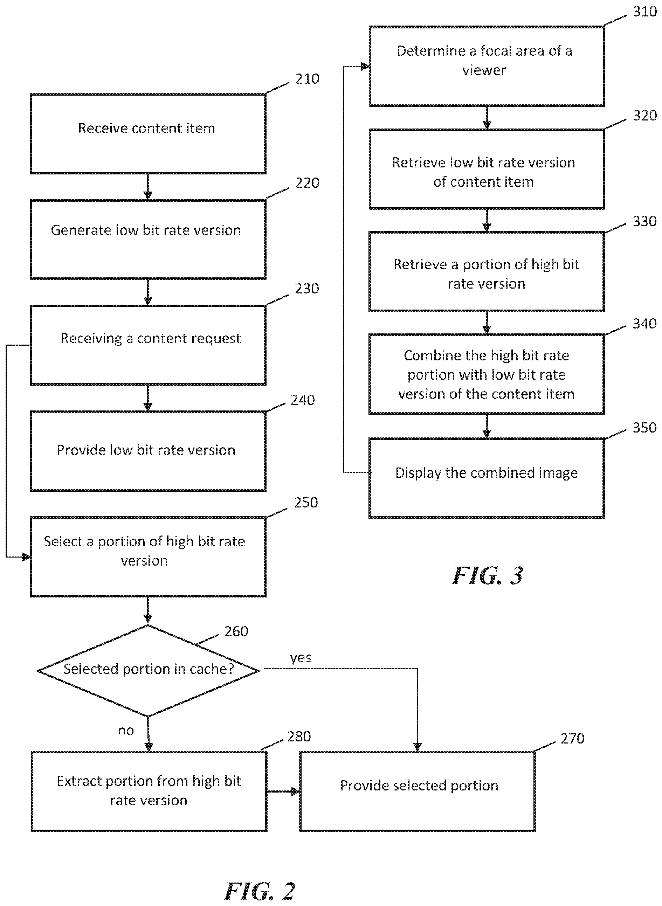

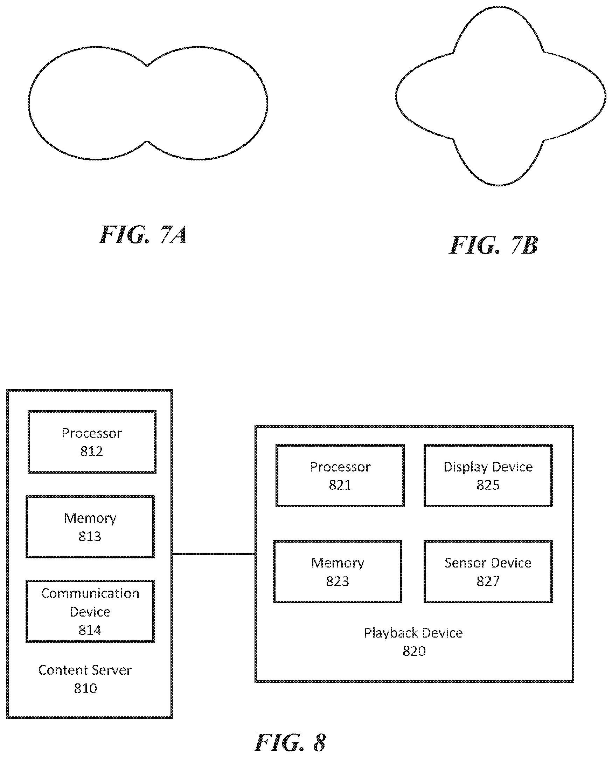

Referring next to FIG. 2, a method for providing content is shown. The steps in FIG. 2 may generally be performed by a processor-based device such as one or more of a computer system, a server, a cloud-based server, a content host, a streaming service host, a media server, and the like. In some embodiments, the steps in FIG. 2 may be performed by one or more of the content server 810 and the playback device 820 described with reference to FIG. 8, the server described with reference to FIG. 1, and/or other similar devices.

In step 210, the system receives a content item. The content item may comprise one or more of a movie, a TV show, a video clip, prerecorded video content, streaming video content, live-streamed video content, and the like. In some embodiments, the video content may comprise a single video stream or a plurality of video streams captured by one or more of a stereoscopic camera system, a panoramic camera system, a surround view camera system, a 360-degree camera system, an omnidirectional camera system, and the like. In some embodiments, the content item may be encoded via any encoding scheme such as MPEG, WMV, VP8, and the like. In some embodiments, the system may further be configured to decode the received content item according to various encoding schemes in step 310.

In step 220, the system generates a low bit rate version of the content item. In some embodiments, the bit rate of the received content may be reduced by one or more of: reducing the resolution of the video, reducing the frame rate of the video, and compressing the video with a lossy compression algorithm. A lossy compression generally means that the compressed video lacks some information present in the original video. In some embodiments, multiple low bit rate versions of the content item may be generated in step 220 and stored for retrieval by playback devices.

In step 230, the system receives a content request. In some embodiments, the content request may be received from a playback device such as a game console, a personal computer, a tablet computer, a television, a head mounted display ("HMD"), an augmented reality device, a virtual reality device, a wearable device, a portable user device, a smartphone, etc. In some embodiments, the content request may identify one or more of the content item being requested, the requested temporal segment, an indication of the viewer's focal point and/or area, and/or other authentication information. In some embodiments, the content request may be similar to a conventional streaming content request. In some embodiments, the content request may comprise an indication of the viewer's focal area which may correspond to a point or an area in the content display area. In some embodiments, the indication of the viewer's focal area may comprise a coordinate or a set of coordinates within the dimension of a frame of the content. In some embodiments, the indication of the viewer's focal area may be represented by a viewing angle. In some embodiments, the focal area may be determined based on a sensor device associated with the playback device comprising one or more of an eye tracking sensor and a head tracking sensor.

In step 240, the low bit rate version of the content is provided to the playback device in response to the content request received in step 230. In some embodiments, multiple low bit rate versions of the content item may be generated in step 220. In step 240, the system may select from among the multiple low bit rate versions of the content item based on one or more of: the current or estimated network throughput between the playback device and the server, the available bandwidth at the server and/or the playback device, the requested video quality specified in the content request, the playback device's processing capacity, user settings, etc. In some embodiments, the selection of the low bit rate version of the content item from a plurality of versions may be similar to conventional adaptive bit rate streaming methods.

In step 250, the system selects a portion of the high bit rate version of the content item based on the content request. The high bit rate version of a content item generally refers a version of the content with a higher bit rate as compared to the low bit rate content provided in step 240. In some embodiments, the high bit rate version of the content item may comprise a higher average bit rate than the low bit rate version of the content over the duration of the video content. In some embodiments, during some or all temporal segments of the video content, the bit rate of the high bit rate version of the content item may be higher than the low bit rate version of the content. In some embodiments, the high bit rate version of the content may comprise the original content received in step 210. In some embodiments, the high bit rate version of the content item may also comprise a reduced bit rate version of the originally received content item.

In some embodiments, the portion of the content selected in step 250 may be selected based on the viewer's focal area comprising one or more of a detected focal point and a predicted future focal point. In some embodiments, the predicted future focal point may be predicted by the server and/or the playback device. In some embodiments, the future focal point may be predicted based on one or more of the viewer's gaze path history, a gaze path profile associated with the viewer, gaze path data collected from a plurality of viewers, and a content provider provided standard gaze path. Examples of predicting the viewer's future focal point are described in United States Patent Application No. 15/280,962, filed on September 29, 2016, entitled "APPARATUS AND METHOD FOR GAZE TRACKING", by inventor Dennis D. Castleman, and identified by Attorney Docket No. 138627 [SCEA16004US00].

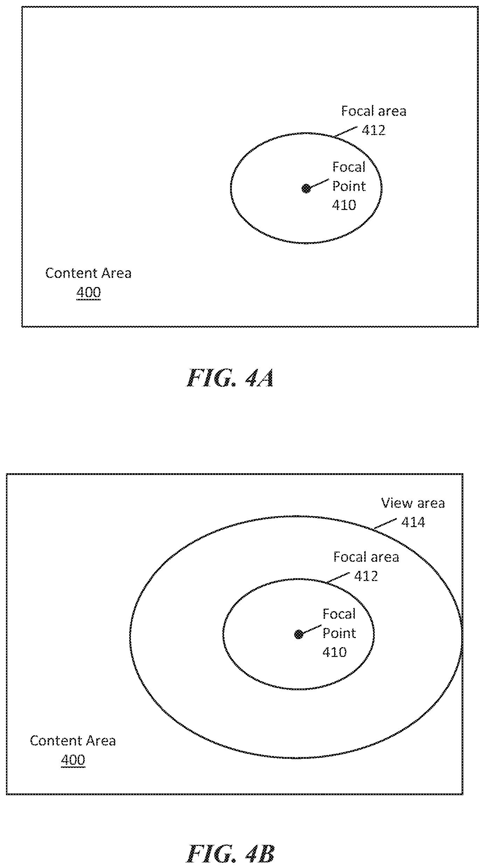

A portion of the content may generally refer to a spatial portion of the display content area such as a set of pixels within a frame. In some embodiments, a portion may comprise the same part of the display content area spanning a plurality of frames. In some embodiments, the portion selected in step 250 may generally correspond to the location of a viewer's focal area in the content display area. In some embodiments, the displayed area of the content may be divided into a plurality of sections. For example, the displayed area of the content may be divided into quadrants, 3x3 grids, 5x5 grids, etc. In some embodiments, one or more sections of the content display area that overlaps the focal area of the viewer may be selected to comprise the portion of the high bit rate version of the content item provided to the playback device. In some embodiments, the focal area and/or the extracted portion of the content may comprise any shape and size. Examples of focal areas and portions extracted from content items are described in more detail with references to FIGS. 4A-4B and FIGS. 7A-7B herein.

In some embodiments, the system may further select from a plurality of original and/or reduced bit rate versions of the content to extract the selected portion based on one or more of: the current or estimated network throughput between the playback device and the server, the available bandwidth at the server and/or the playback device, a requested video quality specified in the content request, the playback device's processing capacity, and user settings. In some embodiments, the portion of the high bit rate version may be extracted from one of the reduced bit rate versions generated in step 220. In some embodiments, the high bit rate version of the content item may generally be selected from versions of the content item with higher bit rate as compared to the low bit rate version of the content item selected in step 240. bit rate as compared to the low bit rate version of the content item selected in step 240.

In some embodiments, the system may be configured to provide two or more portions of the high bit rate version of the content item in step 270. For example, the system and/or the playback device may predict two or more likely future focal areas of the viewer. The system may then select two or more portions of the high bit rate version of the content item based on the two or more likely future focal areas of the viewer in step 250. The playback device may be configured to select from among the provided portions shortly before playback based on the detected focal area.

In step 260, the system determines whether the selected portion has been previously cached in the system. In some embodiments, when a portion of the high bit rate version of the content is extracted, the system may cache the portion for later use. In some embodiments, the system may preliminarily generate a plurality of extracted portions of the high bit rate version of the content item based on predicting the locations that viewers are likely to focus on in the displayed content. For example, preliminarily extracted portions may correspond to high activity areas and/or foreground areas of the displayed content. In some embodiments, the cached portions may each comprise an encoded video stream. In some embodiments, the system may be configured to automatically purge extracted portions that have not been used for a set period of time (e.g. hours, days, etc.). In some embodiments, each cached portion of the high bit rate portion may be identified and retrieved with an area identifier and a time stamp identifier (e.g. section 3B, time 00:30:20-00:30:22). In some embodiments, portions of the high bit rate version of the content may be stored in an encoded form in the cache and be made directly available for streaming to playback devices. If the selected portion has been previously cached, the system may provide the cached portion to the playback device in step 270.

If the selected portion has not been previously cached, the system extracts a portion of the high bit rate version of the content in step 280. In some embodiments, the portion may be extracted from the content received in step 210. In some embodiments, the portion may be extracted from one of the reduced bit rate versions of the originally received content. In some embodiments, the portion of may be extracted by first decoding the received content. In some embodiments, the system may be configured to partially decode and extract a portion of the content from an encoded version of the content item. In some embodiments, step 280 may further comprise processing the extracted portion to include a plurality of empty/transparent pixels or cells around the edge of the extracted portion. The density of empty/transparent pixels may gradually increase toward the outer edge of the extracted portion such that when the extracted portion is combined with a lower bit rate version of the content, the edge between the two images is less noticeable to human eyes. The inclusion of the empty/transparent pixels may further decrease the bandwidth usage for transmitting the portion of the high bit rate version of the content. In some embodiments, step 280 may further comprise separately encoding the extracted portion for streaming. The encoded portion of the high bit rate version of the content item may then be provided to the playback device in step 270. In some embodiments, the portion of the high bit rate version of the content item may be provided in a plurality of encoded video streams each corresponding to a predefined area (e.g. a cell in a grid) of the content display area.

In some embodiments, steps 270 and 240 may occur at substantially the same time to provide corresponding temporal segments of the same content item to the playback device. In some embodiments, the low bit rate version of the content may be provided and buffered at the playback device prior to the corresponding high bit rate portion of the content item being provided in step 270. In some embodiments, the portion of the high bit rate version of the content item and the low bit rate version of the content item may be provided as two separately encoded and transmitted video streams. In some embodiments, portions of the high bit rate version of the content item and the low bit rate version of the content item may be provided from different parts of a server system. For example, a central server may be configured to stream low bit rate versions of content items to playback devices while a plurality of geographically dispersed server devices may be configured to extract and/or provide portions of the high bit rate versions of the same content item to nearby playback devices.

In some embodiments, steps 210 through 270 may be repeated for multiple content items. In some embodiments, steps 250-270 may be repeated periodically as a viewer views a content item at the playback device. For example, the playback device may periodically (e.g. every few milliseconds, seconds, frames, etc.) update the focal area of the viewer at the server, and the system may select a different portion of the high bit rate version of the content item based on the updated focal area of the viewer. In some embodiments, the playback device may be configured to detect a change in the focal area and only notify the server when the location of the focal area changes. In some embodiments, if no focal area is detected (e.g. the user is not currently looking at the screen) the system may skip steps 250-270 and only provide the low bit rate version of the content item to the playback device. In some embodiments, if the user is detected to be not looking at the display device, the system may further select the lowest bit rate version of the content item to provide to the playback device in step 240 to reduce network bandwidth usage. In some embodiments, if an interruption in the streaming of the content is detected, the system may adjust the bit rate of the low and/or high bit rate versions of the content provided to reduce interruptions.

Referring next to FIG. 3, a method for providing content is shown. The steps in FIG. 3 may generally be performed by a processor-based device such as one or more of a game console, a personal computer, a tablet computer, a television, a head mounted display ("HMD"), an augmented reality device, a virtual reality device, a wearable device, a portable user device, a smartphone, a mobile device, and the like. In some embodiments, the steps in FIG. 3 may be performed by one or more of the content server 810 and the playback device 820 described with reference to FIG. 8, the playback device described with reference to FIG. 1, or other similar devices.

In step 310, the system determines a focal area of a viewer. In some embodiments, the focal area may be determined based on a sensor device comprising one or more of an eye tracking sensor and a head tracking sensor. In some embodiments, the head direction of the user may be determined by a head tracker device comprising one or more of an Inertial Measurement Unit (IMU), an accelerometer, gyroscope, an image sensor, and a range sensor. In some embodiments, an IMU may comprise an electronic device that measures and reports a body's specific force, angular rate, and/or magnetic field surrounding the body, using a combination of accelerometers and gyroscopes, sometimes also magnetometers. In some embodiments, the head tracker device may be coupled to a head mounted display (HMD) worn by the user. In some embodiments, the gaze location of the user may be determined by an eye tracker device comprising one or more of an image sensor, an optical reflector sensor, a range sensor, an electromyography (EMG) sensor, and an optical flow sensor.

In some embodiments, the focal area may be determined based on one or more of a detected focal point and a predicted future focal point. In some embodiments, the future focal point may be predicted based on one or more of the viewer's gaze point history, a gaze path profile associated with the viewer, gaze path data collected from a plurality of viewers, and a content provider provided standard gaze path. In some embodiments, the focal area may be represented by a point of focus in a 2D or 3D space. In some embodiments, the focal area may be represented as a 3D angle such as a direction represented by a spherical azimuthal angle (θ) and polar angle (φ). In some embodiments, the focal area may be represented by a 2D polar angle (φ). In some embodiments, the focal area may correspond the pitch, yaw, and roll of the viewer's head, eyes, and/or the display device. In some embodiments, the system may compare the IMU data of the recorded content and the IMU data of the display device to determine the focal area of the viewer relative to the content. In some embodiments, the size of the focal area may further be determined based on the viewer's distance from the display device. For example, for a television display, a smaller focal area may be associated with a viewer sitting 5 feet away from the screen while a larger focal area may be associated with a viewer sitting 10 feet away. In some embodiments, the focal area may be approximated to an area of fixed size and shape around the user's focal point.

In step 320, the playback device retrieves a low bit rate version of a content item. In some embodiments, a playback device sends a content request to a server hosting the content item in step 320 to retrieve the content item. The low bit rate version of the content item may comprise a reduced bit rate version of the content item generated by a content provider and/or the hosting service. In some embodiments, step 320 may occur prior to step 310 and the low bit rate version of the content item may begin to be downloaded, buffered, and/or viewed prior to the focal area of the viewer being determined. In some embodiments, step 320 may correspond to step 240 described with reference to FIG. 2 herein.

In step 330, the playback device retrieves a portion of a high bit rate version of the content item. In some embodiments, the playback device sends a content request identifying the focal area of the viewer determined in step 310 to a server to retrieve the portion of the high bit rate version of the content item. Generally, the retrieved portion may comprise a spatial portion of the content selected based on the focal area of the viewer. In some embodiments, the retrieved portion may comprise a short temporal segment of an area of the content item (e.g. milliseconds, seconds, frames, etc.). In some embodiments, the portion of the high bit rate version of the content item may be retrieved in a video stream separately encoded from the low bit rate version of the content item retrieved in step 320. In some embodiments, the low bit rate version of the content item may buffer ahead of the retrieval of the high bit rate version of the content item. In some embodiments, step 330 may correspond to step 270 described with reference to FIG. 2 herein.

In step 340, the system combines the portion of the high bit rate version of the content item with the low bit rate version of the content item to generate a combined image. In some embodiments, in step 340, the system first decodes the portion of the high bit rate version of the content item retrieved in step 330 and the low bit rate version of the content item retrieved in step 320. In some embodiments, if the resolution and/or frame rate of the low and high bit rate versions of the content item are different, the system may first adjust the resolution and/or frame rate of at least one of the versions prior to combining the images. For example, the system may increase the resolution and/or frame rate of the low bit rate version of the content item to match the resolution and/or frame rate of the high bit rate portion by up-sampling and/or interloping the decoded low bit rate version of the content item.

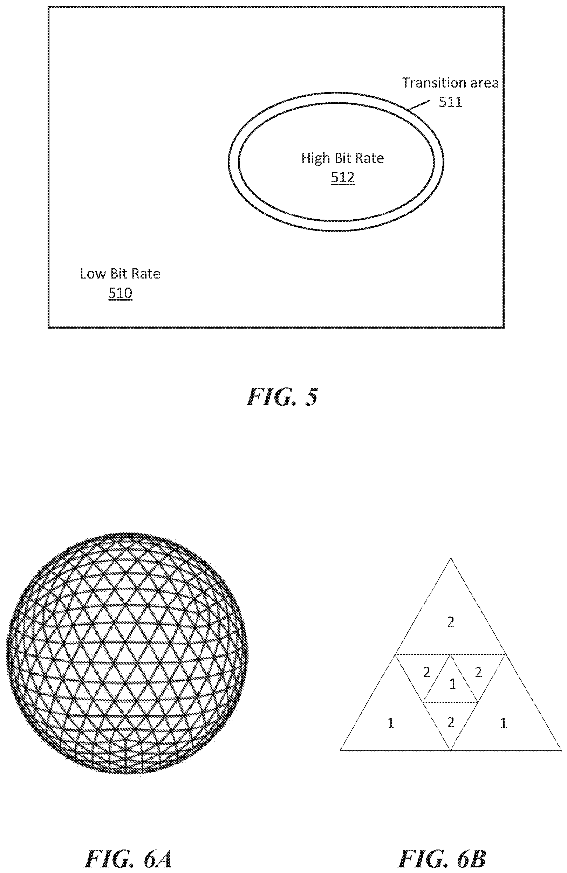

In some embodiments, the system may combine the two versions of the content item by replacing the pixels in the frames of the low bit rate version of the content item with pixels from the corresponding frames of the portion of the high bit rate version of the content item. In some embodiments, the frames may be identified and matched by time stamps. In some embodiments, the image may further be blended to reducing the appearance of a border between the two versions of the content item. In some embodiments, the system blends the versions of the content item by generating a transition area between the portion of the high bit rate version of the content and the low bit rate version of the content. In the transition area, the pixels containing information from the high bit rate version may gradually decrease from the high bit rate area towards the low bit rate area of the displayed content. In some embodiments, blending the portion of the high bit rate version of the content items with the low bit rate version of the content item may comprise grouping pixels into triangular cells for blending. Examples of the transition areas and blending are described with reference to FIGS. 5 and 6A-6B herein. In some embodiments, the high bit rate portion may be provided in a pre-blended form from the server. For example, edges of the high bit rate portion may comprise a plurality of empty/transparent pixels with graduated density. The playback device may then overlay the high bit rate portion with the transparent pixels onto the low bit rate version of the content item without further processing the images and archive the blended effect.

In step 350, the combined image is displayed on a display device. In some embodiments, the display device may comprise one or more of a monitor, a television set, a projector, a head mounted display (HMD), a virtual reality display device, a wearable device, a display screen, a mobile device, and the like. In some embodiments, prior to step 350, the system may further adjust the combined image based on the display device's specifications. For example, for virtual reality display devices, the system may adjust for the warp and distortions associated with the device.

In some embodiments, steps 310 to 350 may be repeated continuously as a viewer views a content item. In some embodiments, based on the focal area detected in step 310, different portions of the high bit rate version of the content item may be retrieved in step 330 and combined with the low bit rate version in step 340 over time. In some embodiments, step 320 may occur independently of steps 310 and 330. In some embodiments, if no focal area is detected, the system may only retrieve the low bit rate version of the content item to display and skip steps 330-350 until a focal point is detected again.

In some embodiments, the system may further be configured to determine a view area of the viewer and retrieve only a portion of the low bit rate content based on a view area of the viewer in step 320. The view area of the viewer may be determined based on one or more of eye tracking and head tracking similar to the determination of the focal area in step 310. The view area of the viewer may generally refer to the area of the content that is visible to the user but may or may not be in focus in the viewer's field of vision. In some embodiments, the view area may comprise an area surrounding the focal area. In some embodiments, the portion of the low bit rate version of the content item retrieved may exclude areas of the content area not within the view area. In some embodiments, the portion of the low bit rate version of the content item retrieved may further exclude the focal area and only include the area that is assumed to be visible to the viewer but not in focus. In some embodiments, the retrieved portion of the low bit rate version of the content item may correspond to one or more of the near, mid, and far peripheral vision area of the viewer's field of vision.

Referring next to FIG. 4A, an illustration of a content display area is shown. The content area 400 represents the entire image area of a content item. While the content area 400 is shown to be a rectangle, in some embodiments, the content area 400 may correspond to a cylinder, a sphere, a semi-sphere, etc. for immersive content and/or omnidirectional video content. The content area 400 may generally comprise any shape, aspect ratio, and size without departing from the spirit of the present disclosure. The focal point 410 represents the viewer's point of focus within the content. In some embodiments, the focal point 410 may correspond to a detected focal point and/or a predicted focal point. The focal area 412 represents an area around the focal point 410 that is likely to be in focus within the viewer's field of vision. In some embodiments, the focal area may comprise one or more of the central, paracentral, macular, near peripheral, and mid peripheral areas of the viewer's field of vision. The size and shape of the focal area 412 are shown as examples only. The relative sizes of the focal area 412 and the content area 400 may also vary. In some embodiments, the shape and size of the focal area 412 may be calibrated for each individual user and/or be estimated based on the viewer's profile containing one or more of viewer demographic information, viewing habits, user feedback, user settings, etc. In some embodiments, the size of the focal area 412 may further be determined based on the viewer's distance from the display screen. In some embodiments, for display device types with a fixed distance between the eyes of the viewer and the display screen (e.g. HMDs), the size of the focal area 412 may generally be assumed to remain the same.

In some embodiments, the playback device may be configured to retrieve a portion of the high bit rate version of the content item corresponding to the focal area 412. In some embodiments, the content area 400 may be divided into a grid comprising a plurality of sections. In some embodiments, sections of the content area 400 overlapping the focal area 412 may comprise the portion of the high bit rate version of the content item retrieved by the playback device. In some embodiments, when the content item is displayed, the high bit rate version of the content item may be displayed in the portion of the content area corresponding to the focal area 412 and sections of the content area 400 defined by the server, the high bit rate area may not be an exact match to the size and shape of the focal area 412 but may generally substantially cover the focal area 412. In some embodiments, the portion of the high bit rate version of the content item may be extracted to closely match the shape and size of the focal area 412.

Referring next to FIG. 4B, another illustration of a content display area is shown. The content area 400, the focal point 410, and the focal area 412 in FIG. 4B may generally be similar to the corresponding elements in FIG. 4A. In some embodiments, the system may further determine a view area 414 surrounding the focal area 412 as shown in FIG. 4B. The view area 414 may generally refer to the area of the content that is visible to the user but may or may not be in focus in the viewer's field of vision. In some embodiments, the portion of the low bit rate version of the content item retrieved may exclude areas of the content area 400 outside of the view area 414. In some embodiments, the portion of the low bit rate version of the content item retrieved may further exclude the focal area 412 and only include the area that is assumed to be visible to the viewer but not in focus. In some embodiments, the view area may correspond to one or more of the near, mid, and far peripheral vision area of the viewer's field of vision.

In some embodiments, the content area 400 may correspond to an immersive video content and/or an omnidirectional video content captured by a plurality of image sensors. The view area 414 may be used to select and stitch a plurality of separately encoded video streams as described in United States Provisional Patent Application No. 62/357,259, filed on June 30, 2016, entitled "APPARATUS AND METHOD FOR CAPTURING AND DISPLAYING SEGMENTED CONTENT". For example, if the view area 414 overlaps two of the four video streams captured by a multi-camera system, the low bit rate version of the content item retrieved may comprise only the two corresponding streams. In some embodiments, the focal area 412 may also comprise data from a plurality of separately encoded video streams that are stitched at the playback device.

Referring next to FIG. 5, an illustration of a transition area is shown. In some embodiments, FIG. 5 may represent a combined image displayed in step 350 of FIG. 3. The displayed image comprises a low bit rate area 510, a high bit rate area 512, and embodiments, FIG. 5 may represent a combined image displayed in step 350 of FIG. 3. The displayed image comprises a low bit rate area 510, a high bit rate area 512, and a transition area 511. In the transition area 511, pixels containing information from the high bit rate area 512 may gradually decrease from the high bit rate area 512 toward the low bit rate area 510. In some embodiments, blending the portion of the high bit rate version of the content with the low bit rate version of the content item comprises grouping pixels in the transition area 511 into cells for blending. In some embodiments, each set of grouped pixels may contain data from one of the versions of the content item or the other. In FIG. 5, the size and shape of the transition area 511 is shown as an example only and the transition area 511 may be of any size, shape, and thickness. Generally, the transition area 511 surrounds the high bit rate area and includes interleaved data from both the high bit rate area 512 and the low bit rate area 510 to reduce the appearance of a border between the two areas.

Referring next to FIGS. 6A and 6B, illustrations of triangular cells are shown. FIG. 6A shows a sphere divided into a plurality of triangular cells. The sphere may correspond to the content area of an omnidirectional and/or immersive video content. In some embodiments, each cell may comprise a unit for blending images. In some embodiments, triangular cells better adapt to the curvature of a sphere and are less noticeable to human eyes as compared to square or rectangular cells. The triangular cells may further be subdivided into smaller triangular cells to provide for adjustable granularity in blending. FIG. 6B illustrates blending using triangular cells. The cells in FIG. 6B may represent a section of a transition area between two versions of a content item. In FIG. 6B, cells labeled with "1" may contain data from one version of a content item and cells labeled with "2" may contain data from a different version of the content item. In some embodiments, each cell in FIG. 6B may be subdivided into smaller triangular cells for more granular blending. In some embodiments, a transition area may have any number of row or columns of triangular cells. In some embodiments, each cell shown in FIGS. 6A and 6B may be merged or subdivided to form triangular cells of different sizes for blending images.

Referring next to FIGS. 7A and 7B, illustrations of focal areas are shown. In some embodiments, the focal area of a viewer may be determined based on the area of the content that is likely to be in focus in a viewer's field of vision. In FIGS. 4A and 4B, the focal area is approximated to an oval. In some embodiments, the focal area may be approximated to a circle, a square, etc. by the system. FIGS. 7A and 7B illustrate other shapes that may represent the shape of the focus area used by the system. The shape shown in FIG. 7A approximates the shape of human's field vision with two merged ovals having aligned major axes. The shape in shown in FIG. 7B comprises two oval having major axes that are perpendicular to each other. The shape shown in FIG. 7B may be used to create a buffer area around the point of focus. For human eyes, vertical or horizontal movements are generally more common than diagonal movements. Therefore, using the shape shown in FIG. 7B to approximate the focal area may allow a viewer to have some vertical or horizontal eye movements without having their focal area leave the high bit rate content area. In some embodiments, the retrieved portion of the high bit rate content item discussed here may correspond one or more of the shapes shown in FIGS. 4A-4B, 7A-7B, a circle, a square, a rectangle, and the like.

Referring next to FIG. 8, there is shown a system for providing and displaying content that may be used to run, implement and/or execute any of the methods and techniques shown and described herein in accordance with some embodiments of the present invention. The system includes a content server 810 and a playback device 820 communicating over a data connection such as a network.

The content server 810 includes a processor 812, a memory 813, and a communication device 814. The content server 810 may generally comprise one or more processor-based devices accessible by the playback device via a network such as the Internet. In some embodiments, the content server may comprise one or more of a cloud-based server, a content host, a streaming service host, a media server, a streaming video server, a broadcast content server, a social networking server, and the like. The processor 812 may comprise one or more of a control circuit, a central processor unit, a graphical processor unit (GPU), a microprocessor, a video decoder, a video encoder and the like. The memory 813 may include one or more of a volatile and/or non-volatile computer readable memory devices. In some embodiments, the memory 813 stores computer executable code that causes the processor 812 to provide content to the playback device 820. In some embodiments, the communication device 814 may comprise one or more of a network adapter, a data port, a router, a modem, and the like. Generally, the communication device 814 may be configured to allow the processor 812 to communicate with the playback device 820. In some embodiments, the processor 812 may be configured to provide a low bit rate version of a content item and a portion of a high bit rate version of the content item to the playback device 820 based on a request from the playback device 820. In some embodiments, the request may comprise an identification of the requested content item and/or an indication of a focal area of the viewer of the content item. In some embodiments, the processor 812 may be configured to generate and/or store at least one of the low bit rate version of the content item and one or more portions of the high bit rate version of the content item based on a received content item.

The memory 813 and/or a separate content library may store one or more content items each comprising at least two versions of the content item having different bit rates. In some embodiments, the content server 810 may be configured to stream the content recorded by a capture device to the playback device 820 in substantially real-time. In some embodiments, the content server 810 may be configured to host a plurality of prerecorded content items for streaming and/or downloading to the playback devices 820 on-demand. While only one playback device 820 is shown in FIG. 8, the content server 810 may be configured to simultaneously receive content from a plurality of capture devices and/or provide content to a plurality of playback devices 820 via the communication device 814. In some embodiments, the content server 810 may be configured to facilitate peer-topeer transfer of video streams between capture devices and playback devices 820. For example, the low bit rate version of the content item may be transferred via a peer-topeer network while portions of the high bit rate content item may be transferred via the content server 810. In some embodiments, the content server 810 may be configured to provide the low bit rate version of the content item and the portion of the high bit rate version of the content item in separately encoded video streams.

In some embodiments, the content server 810 may further be configured to pre-process the content item before providing the content item to the playback device 820. In some embodiments, the content server 810 may soften the edges of the extracted portion of the high bit rate version of the content server by including empty/transparent pixels at the edges prior to providing the portion of the high bit rate content to the playback device 820. When the pre-processed portion of the high bit rate version of the content item is provided to a playback device 820, the playback device 820 may blend the video streams by simply combining the pixel data from the two versions without performing further image processing. In some embodiments, the content server 810 may be configured to combine a low bit rate version of a content item with a portion of the high bit rate version of the content prior to providing the combined content to the playback device 820.

While one content server 810 is shown, in some embodiments, functionalities of the content server 810 may be implemented on one or more processor-based devices. In some embodiments, the content servers 810 for providing low bit rate versions of contents and for providing high bit rate versions of contents may be separately implemented. For example, a central content server may be configured to provide low bit rate versions of contents while a plurality of geographically distributed content servers may be configured to provide portions of the high bit rate versions of contents to playback devices.

The playback device 820 comprises a processor 821, a memory 823, a display device 825, and a sensor device 827. In some embodiments, the playback device 820 may generally comprise a processor-based devices such as one or more of a game console, a media console, a set-top box, a personal computer, a tablet computer, a television, a head mounted display ("HMD"), an augmented reality device, a virtual reality device, a wearable device, a portable user device, a smartphone, etc. The processor 821 may comprise one or more of a control circuit, a central processor unit (CPU), a graphical processor unit (GPU), a microprocessor, a video decoder and the like. The memory 823 may include one or more of a volatile and/or non-volatile computer readable memory devices. In some embodiments, the memory 823 stores computer executable code that cause the processor 821 to determine a focal area of a user and retrieve a content item from the content server 810. In some embodiments, the playback device 820 may be configured to retrieve a low bit rate version and a portion of a high bit rate version of the content item from the content server 810 and/or from a local storage and combine the two versions to generate a combined image to display to the user via the display device 825. In some embodiments, the memory 823 may comprise a buffer for buffering one or more versions of the content item retrieved from the content server 810. In some embodiments, the computer executable code stored in the memory 823 may comprise one or more of a computer program, a software program, a playback device firmware, a mobile application, a game and/or media console application, etc.

The display device 825 may comprise a device for displaying content to a viewer. In some embodiments, the display device 825 may comprise one or more of a monitor, a television, a head mounted display (HMD), a virtual reality display device, a wearable device, a display screen, a mobile device, and the like. In some embodiments, the display device 825 may comprise a stereoscopic display having one or more screens.

The sensor device 827 may comprise one or more sensors configured to determine a focal point and/or area of a viewer of the display device 825. In some embodiments, the sensor device 827 may comprise one or more of an image sensor, an optical reflector sensor, a range sensor, an electromyography (EMG) sensor, and an optical flow sensor for detecting eye and/or head movement. In some embodiments, the sensor device 827 may comprise an IMU that measures and reports a body's specific force, angular rate, and/or magnetic field surrounding the body, using a combination of accelerometers and gyroscopes, sometimes also magnetometers. In some embodiments, the sensor device 827 may be coupled to an HMD and/or a wearable device that allows the sensor to detect the motion of the user's head or eyes via the motion of the HMD and/or wearable device. In some embodiments, the sensor device 827 may comprise an optical sensor for detecting one or more of a head motion and eye-motion of the user. In some embodiments, the sensor may be coupled to an HMD and/or a wearable device and/or be a relatively stationary device that captures data from the viewer from a distance.

While the display device 825 is shown as part of the playback device 820, in some embodiments, the display device 825 may comprise a separate device with or without a separate processor. In some embodiments, the display device 825 may be coupled to the playback device 820 via a wired or wireless communication channel. For example, the playback device 820 may comprise a PC or a game console and the display device 825 may comprise an HMD configured to display content from the playback device 820. In some embodiments, the sensor device 827 may be part of the playback device 820, the display device 825, and/or may be a physically separated device communicating with one or more of the playback device 820 and the display device 825. In some embodiments, one or more of the display device 825 and the sensor device 827 may be integrated with the playback device 820. In some embodiments, the display device 825 may further comprise a processor and/or a memory for at least partially storing the retrieved content and/or the viewer's eye or head movement detected by the sensor device 827.

In some embodiments, the playback device 820 may further include a communication device such as a network adapter, a Wi-Fi transceiver, a mobile data network transceiver, etc. for requesting and downloading content items from the content server 810 and/or a capture device. In some embodiments, the playback device 820 may further include one or more user input/output devices such as buttons, a controller, a keyboard, a display screen, a touch screen and the like for the user to control the selection and playback of content items.

In some embodiments, one or more of the embodiments, methods, approaches, and/or techniques described above may be implemented in one or more computer programs or software applications executable by a processor based apparatus or system. By way of example, such processor based apparatus or systems may comprise a computer, entertainment system, game console, workstation, graphics workstation, server, client, portable device, pad-like device, etc. Such computer program(s) may be used for executing various steps and/or features of the above-described methods and/or techniques. That is, the computer program(s) may be adapted to cause or configure a processor based apparatus or system to execute and achieve the functions described above. For example, such computer program(s) may be used for implementing any embodiment of the above-described methods, steps, techniques, or features. As another example, such computer program(s) may be used for implementing any type of tool or similar utility that uses any one or more of the above described embodiments, methods, approaches, and/or techniques. In some embodiments, program code macros, modules, loops, subroutines, calls, etc., within or without the computer program(s) may be used for executing various steps and/or features of the above-described methods and/or techniques. In some embodiments, the computer program(s) may be stored or embodied on a computer readable storage or recording medium or media, such as any of the computer readable storage or recording medium or media described herein.

Therefore, in some embodiments the present invention provides a computer program product comprising a medium for embodying a computer program for input to a computer and a computer program embodied in the medium for causing the computer to perform or execute steps comprising any one or more of the steps involved in any one or more of the embodiments, methods, approaches, and/or techniques described herein. For example, in some embodiments the present invention provides one or more non-transitory computer readable storage mediums storing one or more computer programs adapted or configured to cause a processor based apparatus or system to execute steps comprising: determining a focal area of a viewer of a content item displayed on a display device, retrieving a low bit rate version of the content item, retrieving a portion of a high bit rate version of the content item corresponding to the focal area, combining the portion of the high bit rate version of the content with the low bit rate version of the content item to generate a combined image, and causing the combined image to be displayed to the viewer via the display device.

While the invention herein disclosed has been described by means of specific embodiments and applications thereof, numerous modifications and variations could be made thereto by those skilled in the art without departing from the scope of the invention set forth in the claims.

## Claims

1. A method for displaying video content, comprising:
determining (310), by a processor-based device (820) coupled to a sensor device, a focal area of a viewer of a content item displayed on a display device coupled to the processor-based device, the content item being a video content item;
retrieving (320), by the processor-based device, a low bit rate version of the content item;
retrieving (330), by the processor-based device, a portion of a high bit rate version of the content item corresponding to the focal area;
combining (340), by the processor-based device, the portion of the high bit rate version of the content item with the low bit rate version of the content item to generate a combined image by replacing a set of pixels in the frame of the low bit rate version of the content item with the portion of the high bit rate version of the content item, wherein the portion of the high bit rate version of the content item includes a set of pixels selected from a corresponding frame of the high bit rate version of the content item based on the focal area; and
causing (350) the combined image to be displayed to the viewer via the display device.

2. The method of claim 1, wherein the focal area is determined based on the sensor device comprising one or more of an eye tracking sensor and a head tracking sensor.

3. The method of claim 1, wherein the focal area is determined based on one or more of a detected focal point and a predicted future focal point.

4. The method of claim 1, further comprising:
retrieving a different portion of the high bit rate version of the content item in response to detecting a change in the focal area of the viewer.

5. The method of claim 1, further comprising:
sending a content request to a content server, wherein the content request comprises an indication of the focal area.

6. The method of claim 1, wherein combining the portion of the high bit rate version of the content item with the low bit rate version of the content item comprises generating a transition area between the portion of the high bit rate version of the content item and the low bit rate version of the content item to blend the portion of the high bit rate version of the content item and the low bit rate version of the content item.

7. The method of any one of claims 1-6, wherein combining the portion of the high bit rate version of the content item with the low bit rate version of the content item comprises grouping pixels into triangular cells for blending.

8. The method of any one of claims 1-6, wherein the portion of the high bit rate version of the content item and the low bit rate version of the content item are retrieved as two separately encoded video streams.

9. The method of any one of claims 1-6, wherein the low bit rate version of the content item comprises lower one or more of resolution, frame rate, and compression quality as compared to the high bit rate version of the content item.

10. A system for displaying video content, comprising:
a processor-based device (820) comprising a processor (821);
a display device (825); and
a sensor device (827);
wherein the processor is coupled to the display device and the sensor device, the processor being configured to:
determine, with the sensor device, a focal area of a viewer of a content item displayed on the display device, the content item being a video content item;
retrieve a low bit rate version of the content item;
retrieve a portion of a high bit rate version of the content item corresponding to the focal area;
combine the portion of the high bit rate version of the content item with the low bit rate version of the content item to generate a combined image by replacing a set of pixels in a frame of the low bit rate version of the content item with the portion of the high bit rate version of the content item, wherein the portion of the high bit rate version of the content item includes a set of pixels selected from a corresponding frame of the high bit rate version of the content item based on the focal area; and
cause the combined image to be displayed to the viewer via the display device.

11. The system of claim 10, wherein the sensor device comprises one or more of an eye tracking sensor and a head tracking sensor.

12. The system of any one of claims 10-11, wherein the display device comprises one or more of a head mounted display, a virtual reality display device, an augmented reality display device, and a display screen.

13. A method for providing video content, comprising:
receiving (210), by a processor-based device (810) comprising a processor (812) coupled to a memory device (813) and a communication device (814), a content item, the content item being a video content item;
generating (220), by the processor-based device, a low bit rate version of the content item;
receiving (230), by the processor-based device, a content request from a another processor-based device, the content request comprising an indication of a viewer focal area;
selecting (250), by the processor-based device, a portion of a high bit rate version of the content item based on the viewer focal area;
providing (270), by the processor-based device, the low bit rate version of the content item and the portion of the high bit rate version of the content item to the another processor-based device in response to the content request; and
combining, by the another processor-based device, the portion of the high bit rate version of the content item with the low bit rate version of the content item to generate a combined image by replacing a set of pixels in a frame of the low bit rate version of the content item with the portion of the high bit rate version of the content item, wherein the portion of the high bit rate version of the content item includes a set of pixels selected from a corresponding frame of the high bit rate version of the content item based on the focal area.

14. A system for providing video content comprising:
a processor-based device (810) comprising a processor (812);
a memory device (813); and
a communication device (814), wherein
the processor is coupled to the memory device and the communication device, the processor being configured to:
receive a content item, the content item being a video content item;
generate a low bit rate version of the content item;
store a high bit rate version of the content item and the low bit rate version of the content item on the memory device;
receive, via the communication device, a content request from a another processor-based device, the content request comprises an indication of a viewer focal area;
select a portion of the high bit rate version of the content item based on the viewer focal area; and
provide the low bit rate version of the content item and the portion of the high bit rate version of the content item to the another processor-based device in response to the content request, wherein the another processor-based device is configured to combine the portion of the high bit rate version of the content item with the low bit rate version of the content item to generate a combined image by replacing a set of pixels in a frame of the low bit rate version of the content item with the portion of the high bit rate version of the content item, wherein the portion of the high bit rate version of the content item includes a set of pixels selected from a corresponding frame of the high bit rate version of the content item based on the focal area.

15. A non-transitory computer readable storage medium storing one or more computer programs configured to cause a processor based system to execute the method according to claim 1 or claim 13.

## Patentansprüche

1. Verfahren zum Anzeigen von Videoinhalten, umfassend:
Bestimmen (310) eines Fokusbereichs von einem Betrachter eines Inhaltselements, das auf einer mit der prozessorbasierten Vorrichtung verbundenen Anzeigevorrichtung angezeigt wird, durch eine prozessorbasierte Vorrichtung (820), die mit einer Sensorvorrichtung verbunden ist, wobei es sich bei dem Inhaltselement um ein Videoinhaltselement handelt;
Abrufen (320) einer Version des Inhaltselements mit niedriger Bitrate durch die prozessorbasierte Vorrichtung;
Abrufen (330) eines Teils einer Hochbitrateversion des Inhaltselements, das dem Fokusbereich entspricht, durch die prozessorbasierte Vorrichtung;
Kombinieren (340) des Teils der Version mit hoher Bitrate des Inhaltselements mit der Version mit niedriger Bitrate des Inhaltselements durch die prozessorbasierte Vorrichtung, um ein kombiniertes Bild zu erzeugen, indem ein Satz von Pixeln im Frame der Version mit niedriger Bitrate des Inhaltselements durch den Teil der Version mit hoher Bitrate des Inhaltselements ersetzt wird, wobei der Teil der Version mit hoher Bitrate des Inhaltselements einen Satz von Pixeln enthält, die basierend auf dem Fokusbereich aus einem entsprechenden Frame der Version mit hoher Bitrate des Inhaltselements ausgewählt wurden; und
Veranlassen (350), dass das kombinierte Bild dem Betrachter über die Anzeigevorrichtung angezeigt wird.

2. Verfahren nach Anspruch 1, wobei der Fokusbereich basierend auf der Sensorvorrichtung bestimmt wird, die einen oder mehrere Augenverfolgungssensoren und einen Kopfverfolgungssensor umfasst.

3. Verfahren nach Anspruch 1, wobei der Fokusbereich basierend auf einem oder mehreren aus einem erkannten Fokus und/oder einem vorhergesagten zukünftigen Fokus bestimmt wird.

4. Verfahren nach Anspruch 1, ferner umfassend:
Abrufen eines anderen Teils der Version des Inhaltselements mit hoher Bitrate als Reaktion auf die Erkennung einer Änderung im Fokusbereich des Betrachters.

5. Verfahren nach Anspruch 1, ferner umfassend:
Senden einer Inhaltsanforderung an einen Inhaltsserver, wobei die Inhaltsanforderung eine Angabe des Fokusbereichs umfasst.

6. Verfahren nach Anspruch 1, wobei das Kombinieren des Teils der Version des Inhaltselements mit hoher Bitrate mit der Version des Inhaltselements mit niedriger Bitrate das Erzeugen eines Übergangsbereichs zwischen dem Teil der Version des Inhaltselements mit hoher Bitrate und der Version des Inhaltselements mit niedriger Bitrate umfasst, um den Teil der Version des Inhaltselements mit hoher Bitrate und der Version des Inhaltselements mit niedriger Bitrate zu mischen.

7. Verfahren gemäß einem der Ansprüche 1 bis 6, wobei das Kombinieren des Teils der Version des Inhaltselements mit hoher Bitrate mit der Version des Inhaltselements mit niedriger Bitrate das Gruppieren von Pixeln in dreieckige Zellen zum Mischen umfasst.

8. Verfahren gemäß einem der Ansprüche 1 bis 6, wobei der Teil der Version des Inhaltselements mit hoher Bitrate und der Teil der Version des Inhaltselements mit niedriger Bitrate als zwei separat codierte Videostreams abgerufen werden.

9. Verfahren gemäß einem der Ansprüche 1 bis 6, wobei die Version des Inhaltselements mit niedriger Bitrate eine niedrigere Auflösung, Bildrate und Komprimierungsqualität oder mehr als die Version des Inhaltselements mit hoher Bitrate aufweist.

10. System zum Anzeigen von Videoinhalten, umfassend:
eine prozessorbasierte Vorrichtung (820), die einen Prozessor (821) umfasst;
eine Anzeigevorrichtung (825); und
eine Sensorvorrichtung (827);
wobei der Prozessor mit der Anzeigevorrichtung und der Sensorvorrichtung gekoppelt ist und der Prozessor konfiguriert ist zum:
Bestimmen einen Fokusbereich von einem Betrachter eines auf der Anzeigevorrichtung angezeigten Inhaltselements mit der Sensorvorrichtung, wobei das Inhaltselement ein Videoinhaltselement ist;
Abrufen einer Version des Inhaltselements mit niedriger Bitrate;
Abrufen eines Teils einer Version mit hoher Bitrate des Inhaltselements, das dem Fokusbereich entspricht;
Kombinieren des Teil der Version des Inhaltselements mit hoher Bitrate mit der Version des Inhaltselements mit niedriger Bitrate, um ein kombiniertes Bild zu erzeugen, indem ein Satz Pixel in einem Frame der Version des Inhaltselements mit niedriger Bitrate durch den Teil der Version des Inhaltselements mit hoher Bitrate ersetzt wird, wobei der Teil der Version des Inhaltselements mit hoher Bitrate einen Satz Pixel enthält, der basierend auf dem Fokusbereich aus einem entsprechenden Frame der Version des Inhaltselements mit hoher Bitrate ausgewählt wurde; und
Bewirken, dass das kombinierte Bild dem Betrachter über die Anzeigevorrichtung angezeigt wird.

11. System nach Anspruch 10, wobei die Sensorvorrichtung einen oder mehrere aus einem Augenverfolgungssensor und einem Kopfverfolgungssensor umfasst.

12. System nach einem der Ansprüche 10 bis 11, wobei die Anzeigevorrichtung ein oder mehrere aus einer am Kopf montierten Anzeige, einer Virtual-Reality-Anzeigevorrichtung, einer Augmented-Reality-Anzeigevorrichtung und einem Anzeigebildschirm umfasst.

13. Verfahren zum Bereitstellen von Videoinhalten, umfassend:
Empfangen (210) eines Inhaltselements durch eine prozessorbasierte Vorrichtung (810), die einen Prozessor (812) umfasst, der mit einer Speichervorrichtung (813) und einer Kommunikationsvorrichtung (814) gekoppelt ist, wobei das Inhaltselement ein Videoinhaltselement ist;
Generieren (220) einer Version des Inhaltselements mit niedriger Bitrate durch die prozessorbasierte Vorrichtung;
Empfangen (230) einer Inhaltsanforderung durch die prozessorbasierte Vorrichtung von einer anderen prozessorbasierten Vorrichtung, wobei die Inhaltsanforderung eine Angabe eines Fokusbereichs des Betrachters umfasst;
Auswählen (250) eines Teils einer Version des Inhaltselements mit hoher Bitrate durch die prozessorbasierte Vorrichtung basierend auf dem Fokusbereich des Betrachters;
Bereitstellen (270) der Version des Inhaltselements mit niedriger Bitrate und des Teils der Version des Inhaltselements mit hoher Bitrate durch die prozessorbasierte Vorrichtung für die andere prozessorbasierte Vorrichtung als Reaktion auf die Inhaltsanforderung; und
Kombinieren des Teils der Version mit hoher Bitrate des Inhaltselements mit der Version mit niedriger Bitrate des Inhaltselements durch die andere prozessorbasierte Vorrichtung, um ein kombiniertes Bild zu erzeugen, indem ein Satz von Pixeln in einem Frame der Version mit niedriger Bitrate des Inhaltselements durch den Teil der Version mit hoher Bitrate des Inhaltselements ersetzt wird, wobei der Teil der Version mit hoher Bitrate des Inhaltselements einen Satz von Pixeln enthält, die basierend auf dem Fokusbereich aus einem entsprechenden Frame der Version mit hoher Bitrate des Inhaltselements ausgewählt wurden.

14. System zum Bereitstellen von Videoinhalten, umfassend:
eine prozessor-basierte Vorrichtung (810), die einen Prozessor (812) umfasst;
eine Speichervorrichtung (813); und
eine Kommunikationsvorrichtung (814), wobei
der Prozessor mit der Speichervorrichtung und der Kommunikationsvorrichtung gekoppelt ist, wobei der Prozessor konfiguriert zum:
Empfangen eines Inhaltselements, wobei das Inhaltselement ein Videoinhaltselement ist;
Generieren einer Version des Inhaltselements mit niedriger Bitrate;
Speichern einer Version des Inhaltselements mit hoher Bitrate und der Version des Inhaltselements mit niedriger Bitrate auf der Speichervorrichtung;
Empfangen einer Inhaltsanforderung über die Kommunikationsvorrichtung von einer anderen prozessorbasierten Vorrichtung, wobei die Inhaltsanforderung eine Angabe eines Fokusbereichs des Betrachters umfasst;
Auswählen eines Teils der Version des Inhaltselements mit hoher Bitrate basierend auf dem Fokusbereich des Betrachters; und
Bereitstellen, als Reaktion auf die Inhaltsanforderung, der Version des Inhaltselements mit niedriger Bitrate und des Teils der Version des Inhaltselements mit hoher Bitrate an die andere prozessorbasierte Vorrichtung, wobei die andere prozessorbasierte Vorrichtung konfiguriert ist, um den Teil der Version des Inhaltselements mit hoher Bitrate mit der Version des Inhaltselements mit niedriger Bitrate zu kombinieren, um ein kombiniertes Bild zu erzeugen, indem sie einen Satz von Pixeln in einem Frame der Version des Inhaltselements mit niedriger Bitrate durch den Teil der Version des Inhaltselements mit hoher Bitrate ersetzt, wobei der Teil der Version des Inhaltselements mit hoher Bitrate einen Satz von Pixeln umfasst, die basierend auf dem Fokusbereich aus einem entsprechenden Frame der Version des Inhaltselements mit hoher Bitrate ausgewählt wurden.

15. Nicht-transitorisches computerlesbares Speichermedium, das ein oder mehrere Computerprogramme speichert, die konfiguriert sind, um ein prozessorbasiertes System zu veranlassen, die Schritte des Verfahrens nach Anspruch 1 oder Anspruch 13 auszuführen.

## Revendications

1. Procédé d'affichage d'un contenu vidéo, comprenant :
la détermination (310), par un dispositif à base de processeur (820) couplé à un dispositif de capteur, d'une zone focale d'un spectateur d'un élément de contenu affiché sur un dispositif d'affichage couplé au dispositif à base de processeur, l'élément de contenu étant un élément de contenu vidéo ;
la récupération (320), par le dispositif à base de processeur, d'une version à faible débit binaire de l'élément de contenu ;
la récupération (330), par le dispositif à base de processeur, d'une partie d'une version à haut débit binaire de l'élément de contenu correspondant à la zone focale ;
la combinaison (340), par le dispositif à base de processeur, de la partie de la version à haut débit binaire de l'élément de contenu avec la version à faible débit binaire de l'élément de contenu afin de générer une image combinée en remplaçant un ensemble de pixels dans la trame de la version à faible débit binaire de l'élément de contenu par la partie de la version à haut débit binaire de l'élément de contenu, dans lequel la partie de la version à haut débit binaire de l'élément de contenu comporte un ensemble de pixels sélectionnés dans une trame correspondante de la version à haut débit binaire de l'élément de contenu sur la base de la zone focale ; et
le fait d'amener (350) l'image combinée à être affichée au spectateur par l'intermédiaire du dispositif d'affichage.

2. Procédé selon la revendication 1, dans lequel la zone focale est déterminée sur la base du dispositif de capteur comprenant un ou plusieurs d'un capteur de suivi oculaire et d'un capteur de suivi de tête.

3. Procédé selon la revendication 1, dans lequel la zone focale est déterminée sur la base d'un ou plusieurs d'un point focal détecté et d'un point focal futur prédit.

4. Procédé selon la revendication 1, comprenant en outre :
la récupération d'une partie différente de la version à haut débit binaire de l'élément de contenu en réponse à la détection d'un changement dans la zone focale du spectateur.

5. Procédé selon la revendication 1, comprenant en outre :
l'envoi d'une demande de contenu à un serveur de contenu, dans lequel la demande de contenu comprend une indication de la zone focale.

6. Procédé selon la revendication 1, dans lequel la combinaison de la partie de la version à haut débit binaire de l'élément de contenu avec la version à faible débit binaire de l'élément de contenu comprend la génération d'une zone de transition entre la partie de la version à haut débit binaire de l'élément de contenu et la version à faible débit binaire de l'élément de contenu afin de mélanger la partie de la version à haut débit binaire de l'élément de contenu et la version à faible débit binaire de l'élément de contenu.

7. Procédé selon l'une quelconque des revendications 1 à 6, dans lequel la combinaison de la partie de la version à haut débit binaire de l'élément de contenu avec la version à faible débit binaire de l'élément de contenu comprend le regroupement de pixels en cellules triangulaires pour le mélange.

8. Procédé selon l'une quelconque des revendications 1 à 6, dans lequel la partie de la version à haut débit binaire de l'élément de contenu et la version à faible débit binaire de l'élément de contenu sont récupérées comme deux flux vidéo codés séparément.

9. Procédé selon l'une quelconque des revendications 1 à 6, dans lequel la version à faible débit binaire de l'élément de contenu comprend un ou plusieurs éléments inférieurs parmi une résolution, une fréquence de trame, et une qualité de compression, par rapport à la version à haut débit binaire de l'élément de contenu.

10. Système d'affichage d'un contenu vidéo, comprenant :
un dispositif à base de processeur (820) comprenant un processeur (821) ;
un dispositif d'affichage (825) ; et
un dispositif de capteur (827) ;
dans lequel le processeur est couplé au dispositif d'affichage et au dispositif de capteur, le processeur étant configuré pour :
déterminer, avec le dispositif de capteur, une zone focale d'un spectateur d'un élément de contenu affiché sur le dispositif d'affichage, l'élément de contenu étant un élément de contenu vidéo ;
récupérer une version à faible débit binaire de l'élément de contenu ;
récupérer une partie d'une version à haut débit binaire de l'élément de contenu correspondant à la zone focale ;
combiner la partie de la version à haut débit binaire de l'élément de contenu avec la version à faible débit binaire de l'élément de contenu afin de générer une image combinée en remplaçant un ensemble de pixels dans une trame de la version à faible débit binaire de l'élément de contenu par la partie de la version à haut débit binaire de l'élément de contenu, dans lequel la partie de la version à haut débit binaire de l'élément de contenu comporte un ensemble de pixels sélectionnés dans une trame correspondante de la version à haut débit binaire de l'élément de contenu sur la base de la zone focale ; et
amener l'image combinée à être affiché au spectateur par l'intermédiaire du dispositif d'affichage.

11. Système selon la revendication 10, dans lequel le dispositif de capteur comprend un ou plusieurs d'un capteur de suivi oculaire et d'un capteur de suivi de tête.

12. Système selon l'une quelconque des revendications 10 à 11, dans lequel le dispositif d'affichage comprend un ou plusieurs parmi un dispositif d'affichage monté sur la tête, un dispositif d'affichage de réalité virtuelle, un dispositif d'affichage de réalité augmentée, et un écran d'affichage.

13. Procédé de fourniture d'un contenu vidéo comprenant :
la réception (210), par un dispositif à base de processeur (810) comprenant un processeur (812) couplé à un dispositif de mémoire (813) et un dispositif de communication (814), d'un élément de contenu, l'élément de contenu étant un élément de contenu vidéo ;
la génération (220), par le dispositif à base de processeur, d'une version à faible débit binaire de l'élément de contenu ;
la réception (230), par le dispositif à base de processeur, d'une demande de contenu à partir d'un autre dispositif à base de processeur, la demande de contenu comprenant une indication d'une zone focale de spectateur ;
la sélection (250), par le dispositif à base de processeur, d'une partie d'une version à haut débit binaire de l'élément de contenu sur la base de la zone focale de spectateur ;
la fourniture (270), par le dispositif à base de processeur, de la version à faible débit binaire de l'élément de contenu et de la partie de la version à haut débit binaire de l'élément de contenu à l'autre dispositif à base de processeur en réponse à la demande de contenu ; et
la combinaison, par l'autre dispositif à base de processeur, de la partie de la version à haut débit binaire de l'élément de contenu avec la version à faible débit binaire de l'élément de contenu afin de générer une image combinée en remplaçant un ensemble de pixels dans une trame de la version à faible débit binaire de l'élément de contenu par la partie de la version à haut débit binaire de l'élément de contenu, dans lequel la partie de la version à haut débit binaire de l'élément de contenu comporte un ensemble de pixels sélectionnés dans une trame correspondante de la version à haut débit binaire de l'élément de contenu sur la base de la zone focale.

14. Système de fourniture d'un contenu vidéo comprenant :
un dispositif à base de processeur (810) comprenant un processeur (812) ;
un dispositif de mémoire (813) ; et
un dispositif de communication (814), dans lequel
le processeur est couplé au dispositif de mémoire et au dispositif de communication, le processeur étant configuré pour :
recevoir un élément de contenu, l'élément de contenu étant un élément de contenu vidéo ;
générer une version à faible débit binaire de l'élément de contenu ;
stocker une version à haut débit binaire de l'élément de contenu et une version à faible débit binaire de l'élément de contenu sur le dispositif de mémoire ;
recevoir, par l'intermédiaire du dispositif de communication, une demande de contenu à partir d'un autre dispositif à base de processeur, la demande de contenu comprenant une indication d'une zone focale de spectateur ;
sélectionner une partie de la version à haut débit binaire de l'élément de contenu sur la base de la zone focale de spectateur ; et
fournir la version à faible débit binaire de l'élément de contenu et la partie de la version à haut débit binaire de l'élément de contenu à l'autre dispositif à base de processeur en réponse à la demande de contenu, dans lequel l'autre dispositif à base de processeur est configuré pour combiner la partie de la version à haut débit binaire de l'élément de contenu avec la version à faible débit binaire de l'élément de contenu afin de générer une image combinée en remplaçant un ensemble de pixels dans une trame de la version à faible débit binaire de l'élément de contenu par la partie de la version à haut débit binaire de l'élément de contenu, dans lequel la partie de la version à haut débit binaire de l'élément de contenu comporte un ensemble de pixels sélectionnés dans une trame correspondante de la version à haut débit binaire de l'élément de contenu sur la base de la zone focale.

15. Support de stockage non transitoire lisible par ordinateur stockant un ou plusieurs programmes informatiques configurés pour amener un système à base de processeur à exécuter le procédé selon la revendication 1 ou la revendication 13.
